# EUROPEAN PATENT APPLICATION

(11) **EP 2 782 063 A1**
(43) Date of publication of application: **24.09.2014**
(21) Application number: 12849699.9
(22) Date of filing: 15.11.2012
(51) Int. Cl.: G06Q 50/10, B60L 11/18, G06Q 50/06, H02J 7/00, H02J 13/00

(54) **BILLING SYSTEM AND ELECTRIC VEHICLE CHARGING SYSTEM**

(30) Priority: 15.11.2011 JP 2011249622; 12.11.2012 JP 2012248556
(71) Applicant: Kabushiki Kaisha Toshiba, Minato-ku Tokyo 105-8001 (JP)
(72) Inventor: SUGIMURA, Tsuyoshi, Tokyo 105-8001 (JP); SAIDA, Toshiyuki, Tokyo 105-8001 (JP)
(74) Representative: Bokinge, Ole
(86) International application number: PCT/JP2012/079677
(87) International publication number: WO 2013/073625

(57) **Abstract**

An accounting system includes a charging device (16) configured to charge a battery (21), an EMS server (14) configured to be communicable with the charging device (16) and a vehicle (42), accounting management module (45A) for executing authentication between user information in a user information database, which stores the user information including a user ID and a billing destination, and information which is received, and an AMI (5) configured to connect the accounting management module (45A) and the EMS server (14). The EMS server (14) is configured to receive the user ID and a charging power amount from the charging device (16), to transmit them to the accounting management module (45A), and to transmit the user ID and a used power amount by the charging to the accounting management module.

## Description

### Technical Field

Embodiments described herein relate generally to an accounting system and an EV charging system.

### Background Art

Electric vehicles and electric two-wheeled vehicles have been gaining in popularity, and there has been a demand for installation of charging stations for batteries mounted on such vehicles, and for development of accounting systems for requesting payment of charges corresponding to charging electric amounts.

On the other hand, at present, an AMI (Advanced Meter Infrastructure: smart meter network) system of a communication system, which connects servers of power companies, has begun to gain in popularity. The AMI communicably connects an EMS and a power company system, the EMS being, for instance, a HEMS (Home Energy Management System) for power energy consumed in load equipment in a customer house, a BEMS (Building Energy Management System) in a case where a building or a commercial establishment is an object, or a FEMS (Factory Energy Management System) in a case where a factory of an industrial facility is an object. Originally, the AMI and EMS are installed for the purpose of consumed energy management of load equipment.

In addition, as described above, in recent years, from the standpoint of reduction in greenhouse gas emissions, vehicles driven with use of electric motors (e.g. electric vehicles and electric two-wheeled vehicles) have been gaining in popularity, in contrast to conventional vehicles driven by engines which generate driving power by using gasoline as fuel. Such vehicles driven by using electric motors are classified into a hybrid-type vehicle which is driven by using both an engine that uses gasoline as fuel and an electric motor, and a vehicle which is driven by using the electric motor alone.

In the hybrid-type vehicle, the battery can be charged by driving the electric motor by the engine. On the other hand, in the vehicle which is driven by using the electric motor alone, since the power charged in the battery is simply consumed, it is necessary to charge the battery with electric power by making use of charging equipment at a predetermined timing.

### Citation List

### Patent Literature

Patent document 1: Jpn. Pat. Appln. KOKAI Publication No. 2009-254123
Patent document 2: Jpn. Pat. Appln. KOKAI Publication No. H09-210702

### Summary of Invention

### Technical Problem

For example, in a case where a charging service company of a third party provides an accounting system independently, if a charging business for electric vehicles is conducted outside a network of the charging service company of the third party on the premises of a charging station or a convenience store, it is judged, in many cases, that the business is outside the objects of business regulation under the Electric Utility Law. For example, even when some accident of power or blackout has occurred at a time of supply of power on the service company side of the charging station, no measure is taken for such an accident or blackout, and there is a concern that this leads to a trouble.

In addition, in general, it is difficult to make clear the location of demand between an electric power company and a charging service company of a third party. If it is made possible to freely divide the demand within the location of demand, it also becomes possible to arbitrarily change the distinction between a deregulated field and a regulated field.

Furthermore, with the division of the demand, it becomes necessary to newly provide power distribution equipment, such as distribution lines, pole transformers and measurement meters, which are necessary for supplying power. Since the cost for investment and maintenance for such equipment leads to a hike in charging rate, there is a concern that the cost will be shouldered by the society as a whole in order to reduce the burden on a specific party.

In these cases, the object of the invention is to provide an accounting system for managing the accounting of power rates for charging the batteries mounted on vehicles such as electric vehicles, by making use of an AMI (Advanced Meter Infrastructure) and an EMS (Energy Management System).

In addition, as described above, in the case of charging the battery by making use of the charging equipment at a predetermined timing, a fixed amount of time is needed until completing the charging of the battery with power. For example, even when the vehicle has gone to the charging equipment for charging, such inconvenience may occur that the charging equipment is occupied by another vehicle, and the charging cannot smoothly be done. Besides, in usual cases, the charging equipment supplies power, which is distributed from power distribution equipment, to the vehicle. Thus, when the power condition of the power distribution equipment is tight, such inconvenience may occur that sufficient power is not distributed from the power distribution equipment to the charging equipment, and the charging equipment is unable to supply sufficient power to the vehicle. In order to resolve this inconvenience, a technique for making it possible to always confirm the condition of use of the charging equipment has becomes important.

In this case, the object of the invention is to provide an EV charging system which makes it possible to always confirm the condition of use of the charging equipment.

### Solution to Problem

An accounting system according to an embodiment includes a charging device, an energy management system, accounting management means, and a smart meter network.

The charging device is configured to charge a battery mounted on a vehicle by a contact method or a non-contact method.

The energy management system is configured to be communicable with the charging device and the vehicle.

The accounting management means executes authentication between user information in a user information database, which stores the user information including a user ID and a billing destination associated with the user ID, and information which is received.

The smart meter network is configured to communicably connect the accounting management means and the energy management system.

The energy management system is configured to receive the user ID and a charging power amount from the charging device, to transmit the user ID of the vehicle and the charging power amount to the accounting management means via the smart meter network, and to transmit, when a notification of permission of charging has been received from the accounting management means and the battery of the vehicle has been charged by the charging device, the user ID of the vehicle and a used power amount by the charging to the accounting management means from the charging device via the smart meter network.

The accounting management means is configured to request payment of a charge corresponding to the used power amount, together with an electric power charge of a user of the vehicle.

An EV charging system according to another embodiment includes charging equipment, power distribution equipment configured to distribute power to the charging equipment, a first vehicle which is not using the charging equipment and sends a charging request including a vehicle ID for identifying a vehicle, request power amount information indicative of a power amount requested from the charging equipment, and vehicle position information indicative of a present position of the vehicle, a second vehicle which is indicative of a vehicle that is using the charging equipment, and a central data center which is communicable with the first vehicle and the power distribution equipment.

The charging equipment includes supply means and first sending means.

The supply means supplies power, which is distributed from the power distribution equipment, to the second vehicle.

The first sending means sends, upon accepting an input of in-vehicle device control unit information which is sent from the second vehicle and includes at least request power amount information indicative of a power amount that is necessary until completion of charging of the second vehicle, the in-vehicle device control unit information, the input of which has been accepted, to the power distribution equipment.

The power distribution equipment includes first storage means, write means and second sending means.

The first storage means stores the in-vehicle device control unit information.

The write means writes, upon accepting an input of the in-vehicle device control unit information sent from the charging equipment, the in-vehicle device control unit information, the input of which has been accepted, in the first storage means.

The second sending means sends to the central data center the stored in-vehicle device control unit information and maximum power amount information indicative of a maximum value of a power amount which can be distributed to the charging equipment.

The central data center includes second storage means, first detection means, and determination means and third sending means.

The second storage means stores equipment information in which an equipment ID for identifying the charging equipment, equipment position information indicative of a position of the charging equipment, and vehicle maximum number information indicative of a maximum number of vehicles, which can be parked at the charging equipment, are associated.

The first detection means detects, upon accepting an input of the charging request sent from the first vehicle, equipment information in which a position indicated by the equipment position information is closest to a position indicated by the vehicle position information, from the vehicle position information included in the charging request the input of which has been accepted, and the equipment position information in the stored equipment information.

The determination means determines, upon accepting an input of the in-vehicle device control unit information and the maximum power amount information sent from the power distribution equipment, whether the charging equipment can supply power to the first vehicle, based on the in-vehicle device control unit information and the maximum power amount information the input of which has been accepted, and the detected equipment information.

The third sending means sends the detected equipment information to the first vehicle, when a determination result by the determination means indicates that power supply is permissible.

### Brief Description of Drawings

FIG. 1 is a view which schematically illustrates a configuration example of an accounting system of an embodiment.
FIG. 2 is a view which schematically illustrates a partial configuration of the accounting system shown in FIG. 1.
FIG. 3 is a view which schematically illustrates a partial configuration of the accounting system shown in FIG. 1.
FIG. 4 is a view which schematically illustrates a partial configuration of the accounting system shown in FIG. 1.
FIG. 5 is a view which schematically illustrates a partial configuration of the accounting system shown in FIG. 1.
FIG. 6 is a flowchart for describing an example of the operation of the accounting system of the embodiment.
FIG. 7 is a schematic view illustrating a configuration example of an EV charging system according to another embodiment.
FIG. 8 is a schematic view for describing a first communication method by charging equipment and a second vehicle according to the embodiment.
FIG. 9 is a schematic view for describing a second communication method by the charging equipment and the second vehicle according to the embodiment.
FIG. 10 is a schematic view for describing a third communication method by the charging equipment and the second vehicle according to the embodiment.
FIG. 11 is a flowchart illustrating an operation example of an EV charging system according to the embodiment.

### Description of Embodiments

An accounting system and an EV charging system according to embodiments will now be described with reference to the accompanying drawing.

### [First embodiment]

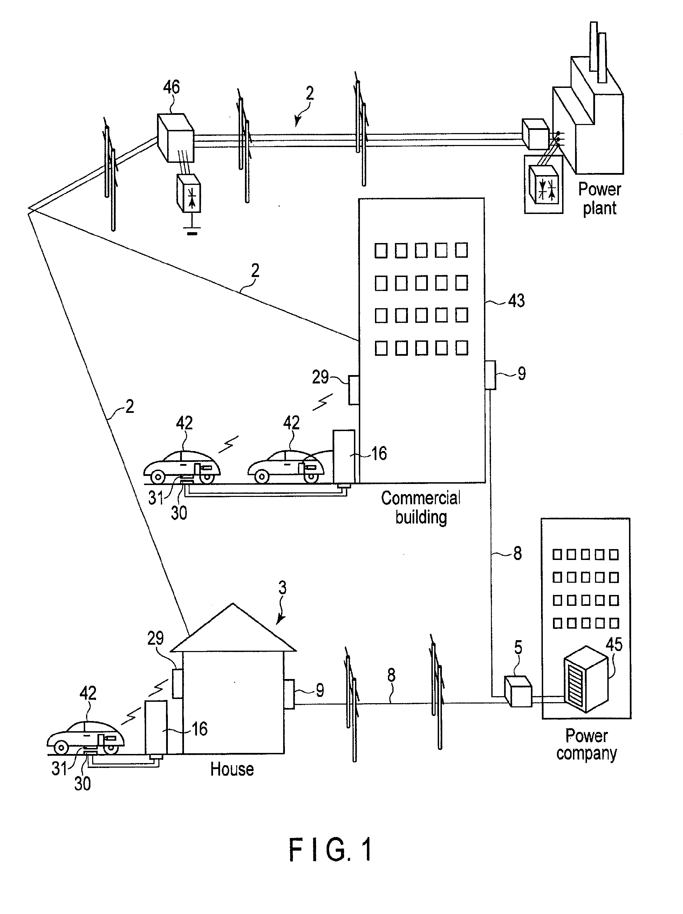

FIG. 1 is a view which schematically illustrates a configuration example of an accounting system according to a first embodiment. The accounting system of this embodiment is an accounting system which manages power rates for charging of batteries mounted on vehicles, by making use of an AMI (Advanced Meter Infrastructure) and an EMS (Energy Management System).

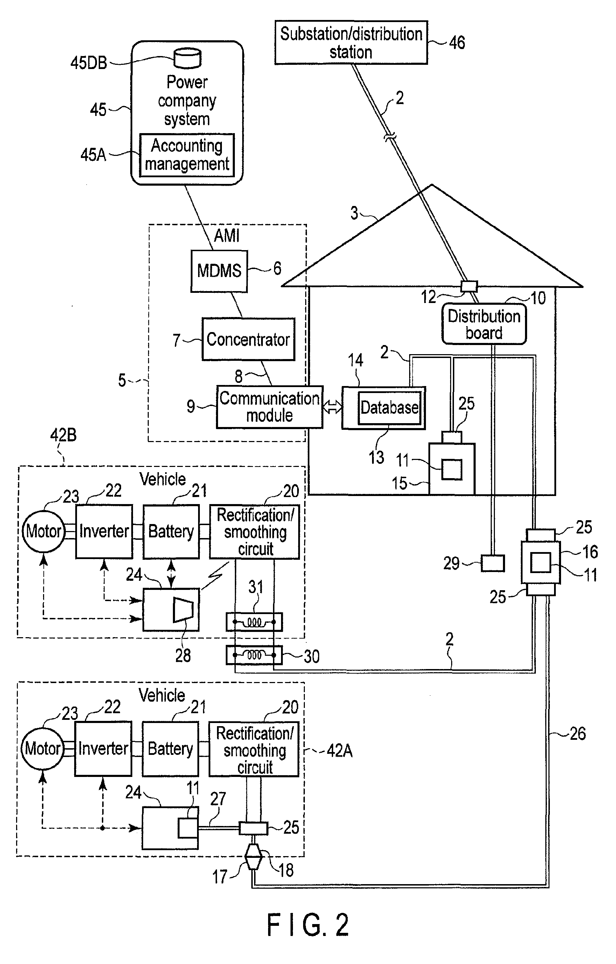

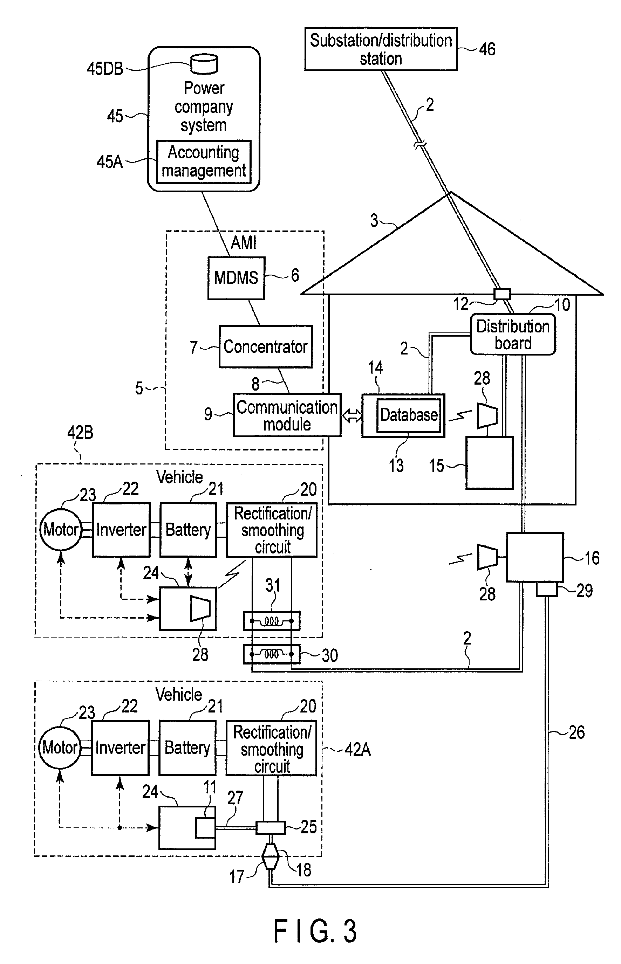

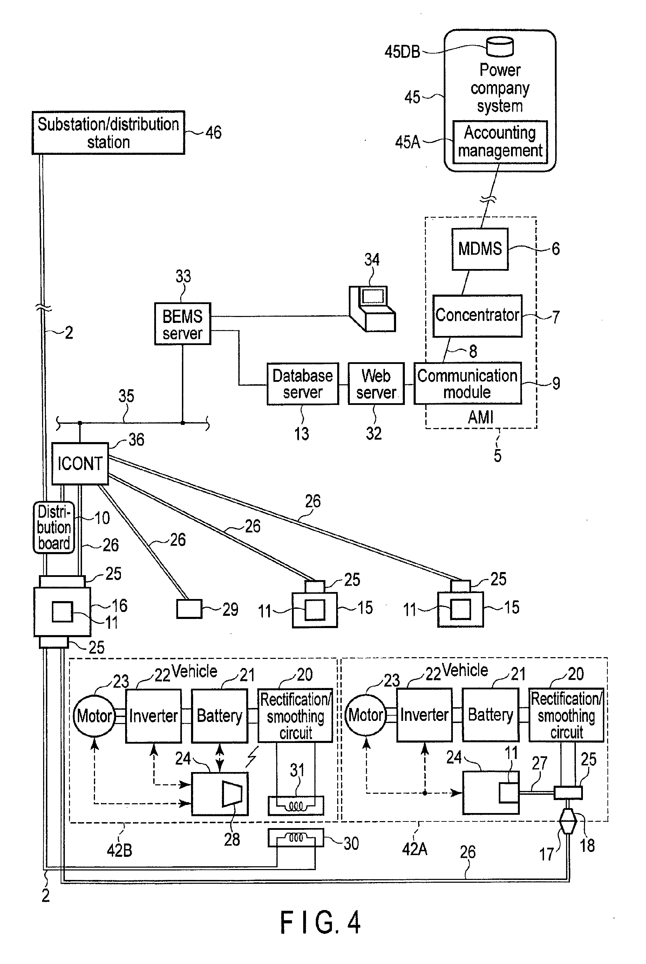

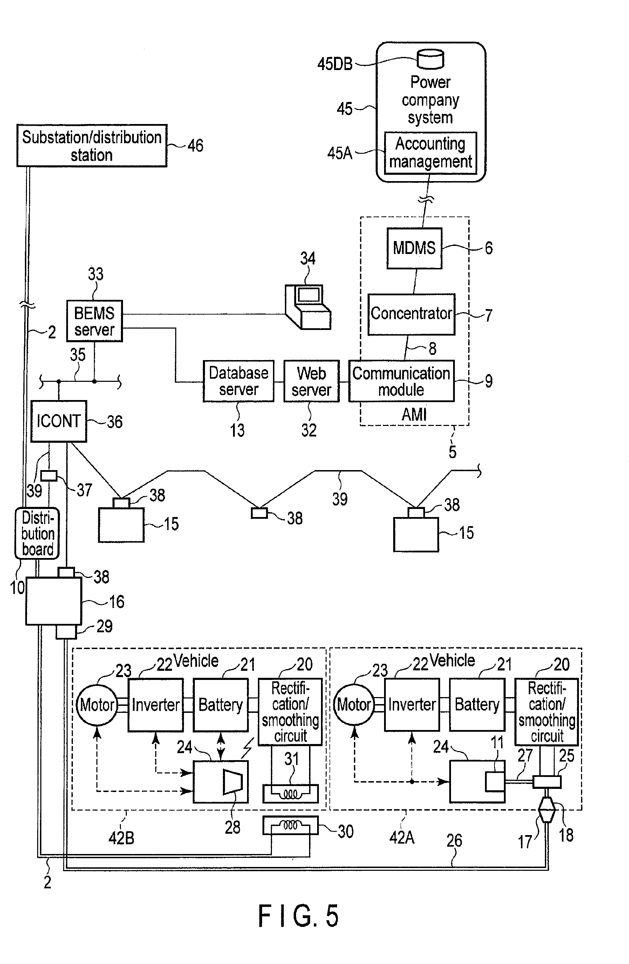

The accounting system of the present embodiment is applied to a house 3 including a HEMS (shown in FIG. 2 and FIG. 3) which is connected to a system 45 of an electric power company via an AMI 5, a distribution board (shown in FIG. 2 and FIG. 3) to which power is supplied from a substation/distribution station 46 over an electric cable 2, and a charging device 16, and to a commercial building 43 including a BEMS (shown in FIG. 4 or FIG. 5) which is connected to the system 45 of the electric power company via the AMI 5, a distribution board (shown in FIG. 4 and FIG. 5) to which power is supplied from the substation/distribution station 46 over an electric cable 2, and a charging device 16. The accounting system executes management of the power rates for charging between the power company system 45 and the EMS.

The power, which is generated by a power plant, is supplied to the substation/distribution station 46 over the electric cables 2, and is fed to the distribution boards of the house 3 and commercial building 43 from the substation/distribution station 46 over the electric cables 2. The distribution boards supply power to electric devices and charging devices 16 in the house 3 and commercial building 43. The charging devices 16 are connected via communication means to EMS servers of the HEMS, BEMS, etc., and transmit information of power amounts charged by the charging devices 16, etc. to the EMS servers. The EMS server is connected to the AMI via a communication module 9, transmits/receives information to/from the power company system 45, and manages power rates for charging.

FIG. 2 is a view which schematically illustrates a configuration example of a part of the accounting system according to the first embodiment. In this example, lower-level communication of the HEMS is executed by PLC (Power Line Communication). The PLC method is a method in which communication is executed by superimposing a PLC-IP (communication protocol for PLC) on an AC/DC power cable as a weak high-frequency modulation signal.

The accounting system of the present embodiment includes a charging device 16, a distribution board 10 for supplying power to the charging device 16, a HEMS server 14, a power company system 45 installed in the power company, an AMI 5 for executing communication between the HEMS server 14 and the power company system 45, and a gateway 29.

The charging device 16 includes a PLC input/output module 11 for executing communication according to the PLC protocol, and a PLC tap 25. A PLC power communication line 26, which extends from the distribution board 10, and a power cable 2 and a PLC power communication line 26, which are connected to vehicles 42, are connected to the charging device 16 via the PLC tap 25. In addition, in this embodiment, a charging power supply system is formed, which can supply, by a contact method or a non-contact method, power to the vehicles 42A, 42B whose batteries 21 are to be charged. Accordingly, the charging device 16 includes a noise filter, a rectification/power factor improvement circuit, and a resonance-type converter.

The distribution board 10 is connected, by PLC power communication lines 26, to the charging device 16, gateway 29, HEMS server 14 and other load equipment 15, and is connected to the substation/distribution station 46 by a power cable 2 which is led in from a power cable lead-in port 12.

The gateway 29 is an automatic relay device with a bridge function, which converts, according to the PLC protocol, a wireless communication signal of a method different from the communication method within the house 3, and outputs the converted signal to the HEMS server 14.

The vehicles 42, which are connected to the charging device 16, include a vehicle 42A which executes contact-type charging, and a vehicle 42B which executes non-contact-type charging.

The vehicle 42A includes a motor 23 which outputs a driving force of an axle that is connected to wheels, an inverter 22, a battery 21 which outputs DC power to the inverter 22, a rectification/smoothing circuit 20 which outputs charging power to the battery 21, an electronic control device 24 for controlling operations of the battery 21, inverter 22 and motor 23, a charging plug 18 which is connected to a charging plug 17, and an PLC tap 25 which is connected to the electronic control device 24, rectification/smoothing circuit 20 and charging plug.

The rectification/smoothing circuit 20 converts input AC power to DC power, outputs the converted power to the battery 21, and charges the battery 21. Incidentally, when the power supplied from the charging device 16 is DC power, the rectification/smoothing circuit 20 may be omitted.

The inverter 22 converts the DC power, which is output from the battery 21, to AC power, and outputs the AC power to the motor 23.

The electronic control device 24 includes a microcomputer, various interfaces, a peripheral circuit, a memory (not shown) storing a user ID of the vehicle body, and a PLC input/output module 11 (first input/output module) which executes communication according to the PLC protocol.

In the meantime, the vehicle 42A, 42B may include a terminal for insertion of a recording medium in which the user ID is recorded. For example, if the electronic control device 24 is equipped with a USB terminal or a card reader, the data of user ID information can be written from the recording medium such as a USB memory or a memory card. For example, in a case where an electric vehicle is used on rental, the user ID information is read in the input/output module 11 from the USB memory or memory card, and when the electric vehicle is brought back, the data is deleted. Thereby, a person, who is other than the owner of the vehicle, can transact with the power company system.

The PLC tap 25 separates a signal, which is supplied from the charging plug 18, into charging power and a communication signal, and outputs them separately to the rectification/smoothing circuit 20 and electronic control device 24. In addition, the PLC tap 25 outputs a communication signal, which is output from the electronic control device 24, to the charging plug 18.

The charging plug 18 is connected to the charging plug 17 which is provided at an end portion of the PLC power communication cable 26 which extends from the charging device 16, and the charging plug 18 connects the PLC power communication line 26 to the PLC tap 25. Accordingly, the PLC input/output module 11 of the electronic control device 24 can communicate with the HEMS server 14 via the charging plugs 17 and 18 and the charging device 16. Incidentally, the charging plug 17 is disposed, for example, at a parking lot.

The vehicle 42B includes a motor 23 which outputs a driving force of an axle that is connected to wheels, an inverter 22, a battery 21 which outputs DC power to the inverter 22, a rectification/smoothing circuit 20 which outputs charging power to the battery 21, an electronic control device 24 for controlling operations of the battery 21, inverter 22 and motor 23, and a charging coupler 31 which is connected to the rectification/smoothing circuit 20. Of these structures, the same structures as in the above-described vehicle 42A are denoted by like reference numerals, and a description is omitted.

The electronic control device 24 includes a microcomputer, various interfaces, a peripheral circuit, a memory storing a user ID of the vehicle body, and an input/output module 28 (second input/output module) which executes wireless communication such as ZigBee (trademark), Wi-Fi, SUN, etc. The input/output module 28 communicates with the HEMS server 14 via the gateway 29.

The charging coupler 31 is used for non-contact charging by electromagnetic induction, and constitutes an insulating transformer by being opposed to a charging coupler 30 which is connected to the charging device 16. The charging coupler 30 is disposed at a parking lot such that the charging coupler 30 is opposed to the charging coupler 31 in accordance with a position where the vehicle 42B is brought to a stop.

The AMI 5 includes an MDMS (Meter Date Management System) 6, and a concentrator 7. The AMI 5 is installed on the power company side.

The concentrator 7 is connected to a plurality of communication modules 9 which are disposed in the house 3 or commercial building 43, over a communication network 8 by wireless communication or by wire by an optical fiber cable, etc., and bundles a plurality of lines from the communication modules 9.

The MDMS 6 acquires, stores and analyzes power use amounts, etc. which are received from the concentrator 7. The MDMS 6 cyclically acquires, stores and analyzes data from the HEMS in the jurisdiction. Based on these data, the power use amounts, etc. in the jurisdiction are understood and, for example, utility rate setting, peak shift of power use, etc. can be performed in accordance with the condition of demands.

The HEMS server 14 includes a database 13. In the database 13, the user ID of the user, who can use the charging device 16, can be registered in advance. The HEMS server 14 includes user ID authentication means (not shown) for determining, when the user ID and the power amount necessary for charging have been received from the vehicle 42A, 42B, whether charging is permitted or not, according to whether the sent user ID is registered in the database 13 or not.

As original objectives of the HEMS server 14, the HEMS server 14 includes, for example, as regards air-conditioning management, a function of correcting a room temperature reference value of a predetermined area which is stored in the database 13, based on information about a desired room temperature which is transmitted from air-conditioning equipment (load equipment) 15 to the HEMS server 14, and a function of transmitting a start or stop instruction about predetermined air-conditioning equipment 15, which is transmitted by the HEMS server 14, to the air-conditioning equipment 15 via the HEMS server 14.

The power company system 45 includes accounting management means 45A for managing accounting for the user, based on the information acquired from the HEMS server 14. The accounting management means 45A includes a user information database 45DB in which the content of the contract between the user corresponding to the user ID and the power company is registered. In this user information database 45DB, the jurisdiction of the power demand/supply of the user, the billing destination of power charges, the presence/absence of arrears of payment of power charges, etc. are registered in association with the user ID.

When the accounting management means 45A has received the user ID and charging power amount from the HEMS server 14, the accounting management means 45A reads out the information associated with the user ID from the user information database 45DB, determines whether the jurisdiction, where the user receives charging services, is within the power demand/supply jurisdiction of the user, whether the user is behind in payment of power charges, etc., and transmits the information corresponding to the results of determination to the HEMS server 14 via the AMI 5.

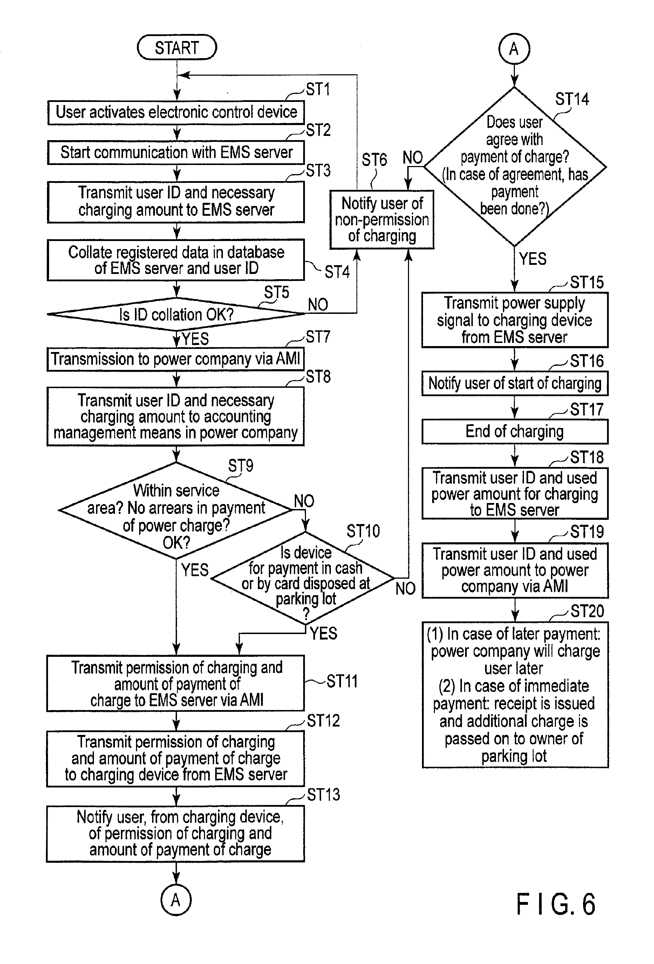

FIG. 6 is a flowchart for describing an example of the operation of the above-described accounting system at a time when the vehicle 42A, 42B performs charging.

To start with, the user of the vehicle 42A, 42B activates the electronic control device 24 (step ST1). The electronic control device 24 may be an electronic control device which is activated by the user operating the interface of the vehicle 42A, 42B, or may be an electronic control device which is automatically activated by the charging plug 17 being connected to the vehicle body for charging, or by the charging coupler 30 and charging coupler 31 being disposed to be opposed.

Subsequently, the electronic control device 24 starts communication with the HEMS server 14 (step ST2). At this time, in the electronic control device 24 of the vehicle 42A, the PLC input/output module 11 communicates with the HEMS server 14 via the PLC power communication line 26 and charging device 16. In the electronic control device 24 of the vehicle 42B, the PLC input/output module 28 communicates with the HEMS server 14 via the gateway 29.

Then, the electronic control device 24 transmits the user ID and charging power amount to the HEMS server 14 (step ST3). The charging power amount may be a power amount which is set by the user operating the interface, or a power amount which corresponds to a power charge that is set by the user, or a power amount which is necessary for fully charging the battery 21. The interface of the vehicle 42A, 42B may be configured such that the user can selectively set one of these power amounts.

Next, after receiving the user ID and charging power amount from the electronic control device 24, the HEMS server 14 executes user authentication by collating the user ID, which is registered in the database 13, with the received user ID (step ST5).

When the received user ID is not registered in the database 13, the HEMS server 14 notifies the electronic control device 24 that the user is a non-registered user, and the electronic control device 24 notifies the user that charging is not permitted (step ST6). At this time, the electronic control device 24 may visually notify the non-permission of charging, for example, by displaying the non-permission of charging on a display provided on the vehicle 42A, 42B, or by lighting a lamp indicating the non-permission of charging, or may notify the non-permission of charging by sound from a speaker.

When the received user ID is registered in the database 13, the HEMS server 14 transmits the user ID and charging power amount to the power company system 45 via the AMI (step ST7), and the user ID and charging power amount are transmitted from the AMI 5 to the accounting management means 45A in the power company system 45 (step ST8).

Subsequently, the accounting management means 45A of the power company system 45 reads out information, which is associated with the received user ID, from the user information database 45DB in the power company system 45, and determines, in combination with the information of the HEMS server 14, whether the charging is within the power service area of the user, and whether the user is behind in payment of power charges (step ST9).

When the charging is not within the power service area of the user, or when the user is behind in payment of power charges, the accounting management means 45A further determines, from the information of the HEMS server 14, whether a settlement device (not shown) for payment in cash or by card is installed at a parking lot, etc. (step ST10).

When the settlement device is not installed, the accounting management means 45A notifies the HEMS server 14 of non-permission of charging, and the HEMS server 14 notifies, by the electronic control device 24, the user of the non-permission of charging (step ST6).

When the charging is within the power service area of the user and there is no arrear in payment of power charges, or when it has been determined in step ST10 that the settlement device is installed, the accounting management means 45A notifies, via the AMI 5, the HEMS server 14 of the non-permission of charging and the amount of payment of charges (step ST11).

Upon receiving the notification of permission of charging, the HEMS server 14 transmits to the charging device 16 the fact that charging is permitted, and the amount of payment of charges, in connection with the charging power amount requested by the user (step ST12).

Next, the charging device 16 notifies the electronic control device 24 of permission of charging, and the amount of payment of charges, and the electronic control device 24 presents to the user the permission of charging, and the amount of payment of charges (step ST13).

Subsequently, the charging device 16 determines whether the user agrees with the amount of payment (step ST14). Incidentally, the user can notify the intention as to whether or not to agree with the amount of payment, for example, by a method of selecting an "Agree" button displayed on the display in the vehicle 42A, 42B.

When the user does not agree with the amount of payment, the charging device 16 notifies the HEMS server 14 of non-permission of charging, and the HEMS server 14 notifies the user of non-permission of charging (step ST6).

When the user agrees with the amount of payment, a power supply signal is transmitted from the HEMS server 14 to the charging device (step ST15).

Subsequently, the charging device 16 notifies the electronic control device 24 that charging is to be started, and starts charging the battery 21 (step ST16). The charging device 16 cyclically transmits to the HEMS server 14 the information of a charging residual capacity, etc. which has been received from the electronic control device 24.

If the charging for a set charging power is completed (step ST17), the charging device 16 transmits the user ID and the uses power amount to the HEMS server 14 (step ST18).

The HEMS server 14 transmits the user ID and used power amount, which have been received from the charging device 16, to the power company system 45 via the AMI 5 (step ST19).

When the payment of the fee for charging will be done later, the power company bills the charging fee at a time of billing the power rate of the user at a later date. When the charging fee is paid immediately by the settlement device, the HEMS server 14 settles the charging fee in cash or by prepaid card or credit card at the settlement device, and issues a receipt.

Further, when a request for charging has been issued from the vehicle 42A, 42B, whose user ID is not registered in the database 13, it is possible to impose, through the power company system 45, an additional fee to the user who has used charging at the parking lot. Specifically, the charge to be paid differs between a user whose user ID is registered, and a user whose user ID is not registered. In this case, in step ST13, the charge to be paid, including the additional fee, may be transmitted from the HEMS server 14 to the PLC input/output module 11 in the electronic control device 24, and the charging may be permitted if the user agrees with the payment, and the additional fee may be passed on to the owner of the parking lot (the administrator of the HEMS server 14) from the power company.

In addition, the rate may be changed in the power company system 45 or HEMS server 14. In the case where the rate has been changed in the HEMS server 14, the changed data is transmitted to the power company system 45. By changing the rate as described above, a merit may be brought to a consumer who provided the charging equipment by installing the charging device 16.

As has been described above, according to the present embodiment, it is possible to provide an accounting system which manages, with use of the AMI and EMS, the accounting of the power rate for charging the battery mounted on a vehicle such as an electric vehicle.

The AMI and EMS have been gaining in popularity as a system for executing consumed energy management of load equipment. In the present embodiment, by making use of this, it is possible to provide an accounting system which operates together with a power company system by using existing equipment, by making it possible to manage the consumed energy of the charging device, like the consumed energy of other load equipment, by using the AMI and EMS server.

### [Second embodiment]

Next, an accounting system according to a second embodiment is described with reference to the drawings. In the description below, the same structure as in the accounting system of the above-described first embodiment is denoted by like reference numerals, and a description thereof is omitted.

FIG. 3 is a view which schematically illustrates a partial configuration of the accounting system shown in FIG. 1. In this example, a lower-level network communication of the HEMS is executed by using wireless communication such as ZigBee, Wi-Fi, SUN, etc.

In the present embodiment, the PLC input/output module 11 in the vehicle 42A, 42B is unable to execute direct communication with a lower-level network of the HEMS server 14. Thus, the charging device 16 and the PLC power communication line 26, which extends from the PLC input/output module 11, are connected via a bridge function-equipped automatic relay device (gateway) 29 which mutually changes a PLC communication method and a wireless communication method of any one of ZigBee, Wi-Fi and SUN. Except for this configuration, the accounting system of the present embodiment is the same as the accounting system of the first embodiment.

Even in the case where the lower-level network of the HEMS server 14 is implemented by wireless communication, as described above, it is possible to provide, like the above-described first embodiment, an accounting system which manages, with use of the AMI and EMS, the accounting of the power rate for charging the battery mounted on a vehicle such as an electric vehicle.

### [Third embodiment]

Next, an accounting system according to a third embodiment is described with reference to the drawings.

FIG. 4 is a view which schematically illustrates a partial configuration of the accounting system shown in FIG. 1. This example relates to an accounting system in which a PLC method is implemented as a lower-level network communication method of a BEMS server 33, whose target is a building or a commercial facility. Incidentally, the configurations of the vehicle 42A, 42B, AMI 5 and power company system 45 are the same as those in the above-described first embodiment and second embodiment.

The accounting system of the present embodiment includes a BEMS server 33, a database 13, a Web server 32, a BACnet/IP 35 which is an upper-level network line to which the BEMS server 33 is connected, a PLC power communication line 26 which constitutes a lower-level network, an ICONT 36 which is disposed between the BACnet/IP 35 and the PLC power communication line 26, a distribution board 10, an PLC tap 25, a gateway 29, a charging device 16, an AMI 15, and accounting management means 45A of the power company system 45.

The ICONT 36 is a gateway for converting the BACnet/IP 35 to a PLC communication protocol, and converting the PLC communication protocol to the BACnet/IP 35.

The input/output module 28 of the vehicle 42B communicates with the BEMS server 33 via the gateway 29, ICONT 36 and BACnet/IP 35. The PLC input/output module 11 of the vehicle 42A communicates with the BEMS server 33 via the PLC power communication line 26, charging device 16, ICONT 36 and BACnet/IP 35.

The BEMS server 33 is connected to the ICONT 36, information terminal 34, database server 13 and Web server 32 by the BACnet/IP35. The BEMS server 33 can communicate with the accounting management means 45A of the power company system 45 via the Web server 32 and AMI 5.

The information terminal 34 inputs data to the BEMS server 33, and displays data which is managed by the BEMS server 33. The administrator can operate the information terminal 34 and register the user ID in the database 13. Thereby, when the user ID is set in the database 13 in advance, the collation of the user ID, which is received from the input/output module 11, 28 of the vehicle 42A, 42B, can be executed. For example, if only the user ID of the contractant of the building is registered in the database 13, it is possible to prevent a vehicle 42A, 42B, other than the vehicle 42A, 42B of the contractant of the building, from being charged with use of the equipment.

In addition, a remote instruction may be executed on the information terminal 34, and charging of the battery 21 of the vehicle 42A, 42B can be started via the BACnet/IP 35, ICONT 36, the PLC power communication line and the charging device 16.

In the meantime, as original objectives of the BEMS, for example, the BEMS server 33 includes a function of correcting a room temperature reference value of a predetermined area which is stored in the database 13, based on information about a desired room temperature which is transmitted by the information terminal 34 that is being connected to the WEB server 32, and a function of transmitting a start or stop instruction about predetermined air-conditioning equipment (load equipment) 15, which is transmitted by the information terminal 34 that is being connected to the WEB server 32, to the load equipment 15 via the database 13.

Incidentally, the operation at the time of charging the battery 21 of the vehicle 42A, 42B is the same as in the above-described first to third embodiments.

Specifically, according to the present embodiment, it is possible to provide an accounting system which manages, with use of the AMI and EMS, the accounting of the power rate for charging the battery mounted on a vehicle such as an electric vehicle.

### [Fourth embodiment]

Next, an accounting system according to a fourth embodiment is described with reference to the drawings.

FIG. 5 is a view which schematically illustrates a partial configuration of the accounting system shown in FIG. 1. This example relates to an accounting system in which LonWork is implemented as a lower-level network communication method of a BEMS server 33, whose target is a building or a commercial facility. There is a case of executing distributed control of equipment disposed in a building, by LonWorks (trademark) to which LON (Local Operation Network) technology is applied. This embodiment illustrates an example in which the lower-level network of the BEMS server 33 is constructed by the LonWorks method.

The accounting system of the present embodiment includes a BEMS server 33, a database 13, a Web server 32, a BACnet/IP 35 which is an upper-level network line to which the BEMS server 33 is connected, a LonTalk 39 (LonWork communication protocol) which constitutes a lower-level network, an ICONT 36 which is disposed between the BACnet/IP 35 and the LonTalk 39, a distribution board 10, LonWorks input/output modules 38, a charging device 16, an AMI 15, and accounting management means 45A of the power company system 45.

The ICONT 36 is a gateway for converting the BACnet/IP 35 to a communication protocol of LonWork, and converting the communication protocol of LonWork to the BACnet/IP 35.

The respective LonWorks input/output modules 38 are connected by the LonTalk 39. The LonWorks input/output module 38 includes an LSI which is called a neuron chip. The LonWorks input/output module 38 can execute communicate with a ZigBee method. Accordingly, when the input/output module 28, which is mounted on the electronic control device 24 of the vehicle 42B, communicates by the ZigBee method, direct communication can be executed between the LonWorks input/output module 38 and the input/output module 28.

Specifically, the input/output module 28 of the vehicle 42B communicates with the BEMS server 33 via the LonWorks input/output module 38, ICONT 36 and BACnet/IP 35. The PLC input/output module 11 of the vehicle 42A communicates with the BEMS server 33 via the PLC power communication line 26, gateway 29, charging device 16, LonWorks input/output module 38, ICONT 36 and BACnet/IP 35.

Incidentally, the accounting system of the present embodiment has the same configuration as the above-described third embodiment, except for the above-described points. The operation at the time of charging the battery 21 of the vehicle 42A, 42B is the same as in the above-described first to third embodiments.

Specifically, according to the present embodiment, it is possible to provide an accounting system which manages, with use of the AMI and EMS, the accounting of the power rate for charging the battery mounted on a vehicle such as an electric vehicle.

In the above-described plural embodiments, the accounting management means 45A determines whether the user's registration area is within the power company service area or not (whether the user ID is registered in the power company 45 or not), and the charging is not permitted when the user's registration area is outside the power company service area. By the cooperation between the systems of plural power companies corresponding to service areas, the charging may be permitted for users outside the power company service area.

### [Fifth embodiment]

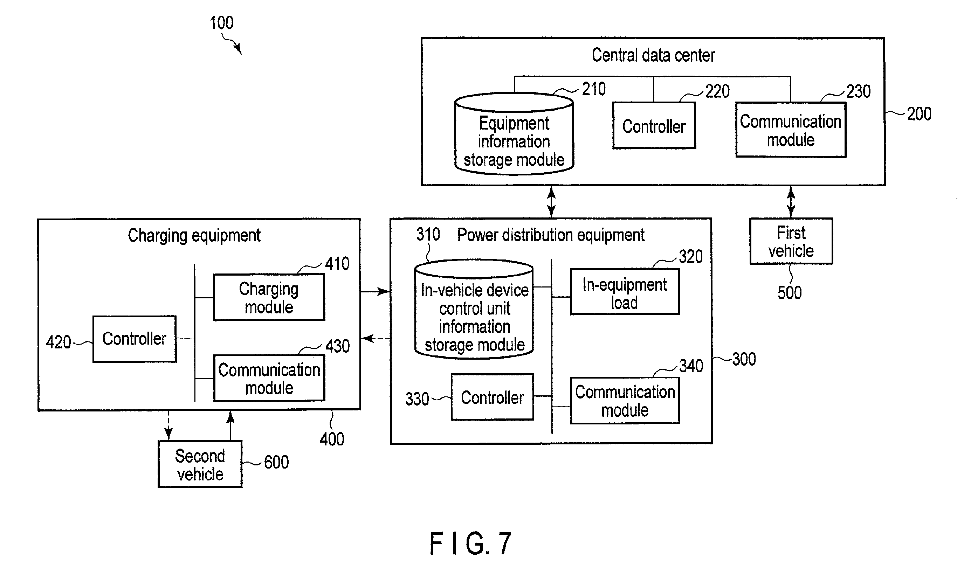

FIG. 7 is a schematic view illustrating a configuration example of an EV (Electric Vehicle) charging system according to a fifth embodiment. The EV charging system 100 shown in FIG. 7 includes a central data center 200, power distribution equipment 300, charging equipment 400, a first vehicle 500 and a second vehicle 600. Incidentally, in the present embodiment, for the purpose of simple description, it is assumed that there are provided one power distribution equipment 300, one charging equipment 400, one first vehicle 500 and one second vehicle 600. However, the numbers of these devices 300 to 600 are not limited to this example.

Next, the functions of the respective devices 200 to 600 are described.

The central data center 200, as illustrated in FIG. 1, includes an equipment information storage module 210, a controller 220 and a communication module 230. The equipment information storage module 210 is a storage device which stores equipment information in which an equipment ID for identifying the charging equipment 400, equipment position information indicative of a position of the charging equipment 400, and vehicle maximum number information indicative of the maximum number of vehicles, which can be parked at the charging equipment, are associated. The controller 220 executes various processes in the central data center 200. Incidentally, since the contents of the various processes, which are executed in the controller 220, will be described along with a later description of a flowchart, a detailed description is omitted here. The communication module 230 is a communication interface which enables communication with the power distribution equipment 300 and the first vehicle 500.

The power distribution equipment 300, as illustrated in FIG. 7, includes an in-vehicle device control unit (hereinafter referred to as ECU) information storage module 310, an in-equipment load 320, a controller 330 and a communication module 340, and distributes power to the charging equipment 400 (i.e. the power distribution equipment 300 function as an energy management system which not only manages a supply power amount to the in-equipment load 320, but can also manage a distribution power amount to the charging equipment 400). The ECU information storage module 310 is a storage device which stores ECU information in which battery information indicative of a battery residual capacity of the second vehicle 600 and necessary power amount information indicative of a power amount necessary until completing the charging of the second vehicle 600 are associated. The in-equipment load 320 is various loads provided in the power distribution equipment 300 (e.g. electronic devices such as lighting apparatus and an air-conditioner). The controller 330 executes various processes in the power distribution equipment 300. Incidentally, since the contents of the various processes, which are executed in the controller 330, will be described along with a later description of a flowchart, a detailed description is omitted here. The communication module 340 is a communication interface which enables communication with the central data center 200 and charging equipment 400.

The charging equipment 400, as illustrated in FIG. 7, includes a charging module 410, a controller 420 and a communication module 430. The charging module 410 executes a charging process of supplying power, which is distributed from the power distribution equipment 300, to the second vehicle 600. The controller 420 executes various processes in the charging equipment 400 (except the charging process by the charging module 410). Incidentally, since the contents of the various processes, which are executed in the controller 420, will be described along with a later description of a communication method, a detailed description is omitted here. The communication module 430 is a communication interface which enables communication with the power distribution equipment 300 and the second vehicle 600.

The first vehicle 500 is indicative of a vehicle which does not currently using the charging equipment 400, and sends a charging request to the central data center 200. The charging request is a request which is sent to the central data center 200 from the first vehicle 500 in accordance with a user's operation. Specifically, the charging request is a request including a vehicle ID for identifying the first vehicle 500, request power amount information indicative of a power amount requested from the charging equipment 400, and vehicle position information indicative of the present position of the first vehicle 500. Incidentally, in the present embodiment, although it is assumed that the charging request includes the vehicle ID, the request power amount information and the vehicle position information, the information included in the charging request is not limited to these examples.

The second vehicle 600 is indicative of a vehicle which is currently using the charging equipment 400, and sends ECU information to the charging equipment 400.

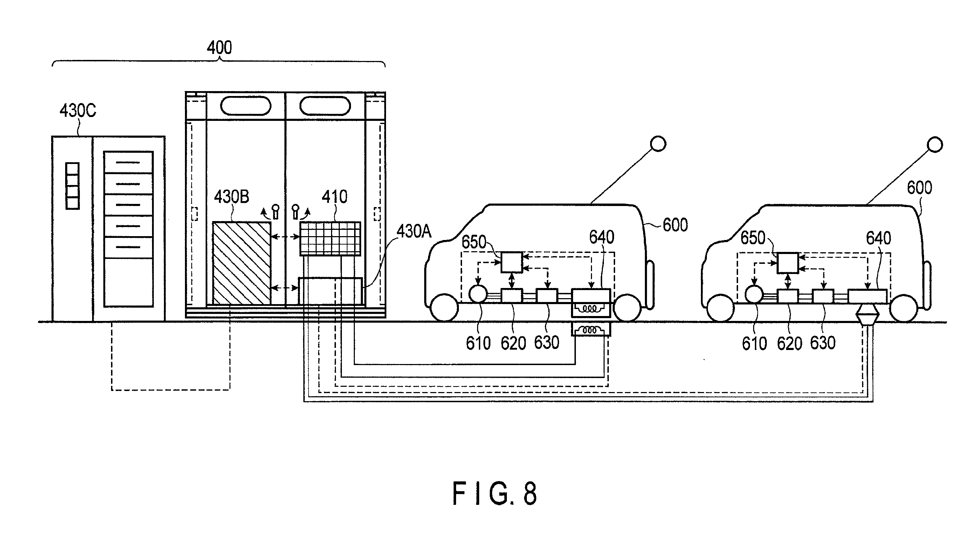

Referring now to schematic views of FIG. 8 to FIG. 10, a description is given of methods of communication between the charging equipment 400 and the second vehicle 600. Three communication methods (first to third communication methods) will be described below.

In the first communication method illustrated in FIG. 8, ECU information is sent from an ECU 650, which controls a motor 610 and an inverter 620 for outputting a driving force of the axle connected to the wheels of the second vehicle 600, a battery 630 for outputting DC power to the inverter 620 and a rectification/smoothing circuit 640 for outputting charging power to the battery 630, to a communication module 430A in the charging equipment 400 by a predetermined in-vehicle communication protocol (e.g. CAN (trademark), FlexRay (trademark), LIN, MOST and IEEE1394). Incidentally, when the controller 420 (not shown in FIG. 8) in the charging equipment 400 has accepted, via the communication module 430A, an input of ECU information which has been sent from the second vehicle 600, the controller 420 executes a protocol conversion process of converting the protocol of the ECU information, the input of which has been accepted, to a communication protocol for the power distribution equipment 300 (i.e. a communication protocol used in a communication module 430B, 430C), and then sends the ECU information of the converted protocol to the power distribution equipment 300 via the communication module 430B, 430C.

In the meantime, examples of the communication protocol, which is used in the communication module 430B, 430C, include wired protocols for use in LONWORKS (trademark), OPC (trademark), PLC (Programmable Logic Controller) and Ethernet (trademark), and wireless protocols for use in ZigBee (trademark), Wi-Fi (trademark) and SUN. In addition, in the case where the communication protocol used in the communication module 430B, 430C is a wired protocol, the communication modules 430A, 430B are connected by wire. In the case where the communication protocol used in the communication module 430B, 430C is a wireless protocol, the communication modules 430A, 430B are connected wirelessly.

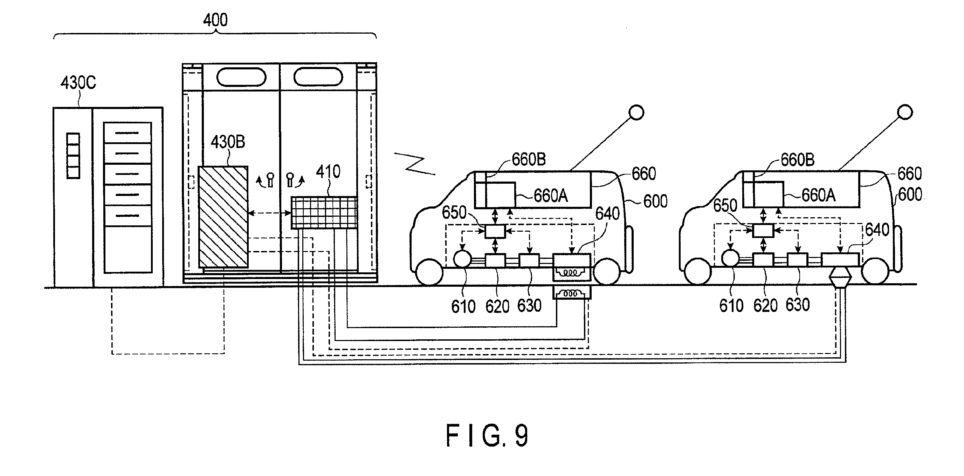

In the second communication method illustrated in FIG. 9, ECU information is sent from the ECU 650 in the second vehicle 600 to a car navigation system (hereinafter referred to as "car-navi") 660 mounted on this vehicle by a predetermined in-vehicle communication protocol. The car-navi 660 includes a communication module 660A which can execute the same process as the protocol conversion process by the above-described controller 420, and a protocol receiver 660B which accepts an input of protocol information indicative of a communication protocol used in the 430B, 430C in the charging equipment 400. When the communication module 660A in the car-navi 660 has accepted an input of ECU information which has been sent from the ECU 650, the communication module 660A converts the protocol of the ECU information, the input of which has been accepted, to a communication protocol indicated by the protocol information, the input of which has been accepted in the protocol receiver 660B, and then sends the ECU information of the converted protocol to the communication module 430B in the charging equipment 400. In the meantime, when the controller 420 (not shown in FIG. 9) in the charging equipment 400 has accepted, via the communication module 430B, an input of ECU information which has been sent from the second vehicle 600, the controller 420 sends the ECU information, the input of which has been accepted, to the power distribution equipment 300 via the communication module 430B, 430C.

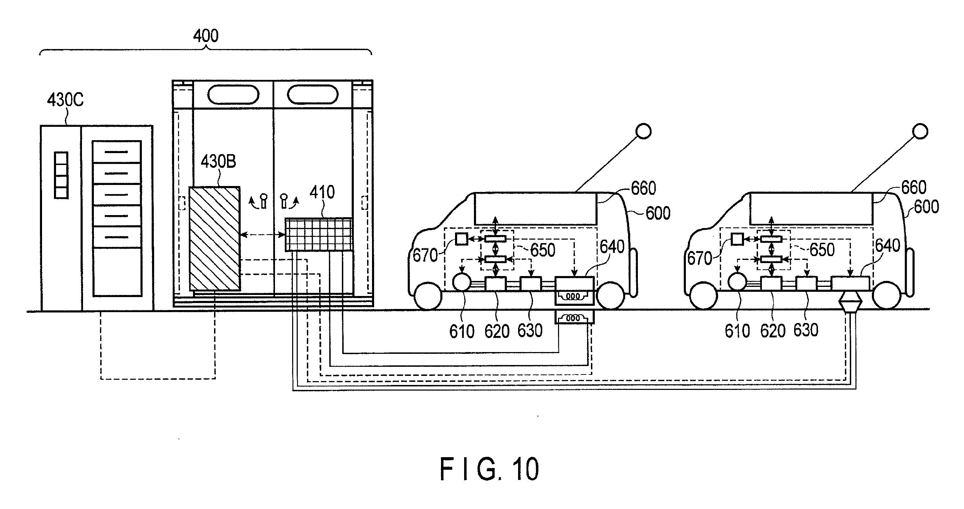

In the third communication method illustrated in FIG. 10, ECU information is protocol-converted by a protocol receiver 670 having both functions of the above-described communication module 660A and protocol receiver 660B, and is then sent from ECU 650 to the car-navi 660. Subsequently, when the car-navi 660 has accepted an input of the ECU information which has been sent from the ECU 650, the car-navi 660 sends the ECU information, the input of which has been accepted, to the communication module 430B in the charging equipment 400. In the meantime, when the controller 420 (not shown in FIG. 10) in the charging equipment 400 has accepted, via the communication module 430B, an input of ECU information which has been sent from the second vehicle 600, the controller 420 sends the ECU information, the input of which has been accepted, to the power distribution equipment 300 via the communication module 430B, 430C.

Incidentally, although FIG. 8 to FIG. 10 depict two kinds of second vehicles 600 with different charging methods (i.e. a second vehicle 600 which is charged by inserting a plug, and a second vehicle 600 which is charged by making use of electrostatic induction), it should suffice if the second vehicle 600 is an EV, which may use any kind of charging method.

In addition, in FIG. 9 and FIG. 10, although the description has been given of the method of realizing the communication between the charging equipment 400 and the second vehicle 600 by using the car-navi 660 mounted on the second vehicle 600, the method of realizing the communication is not limited to this example. For example, the communication between the charging equipment 400 and the second vehicle 600 may be realized by using a smartphone or the like in place of the car-navi 660.

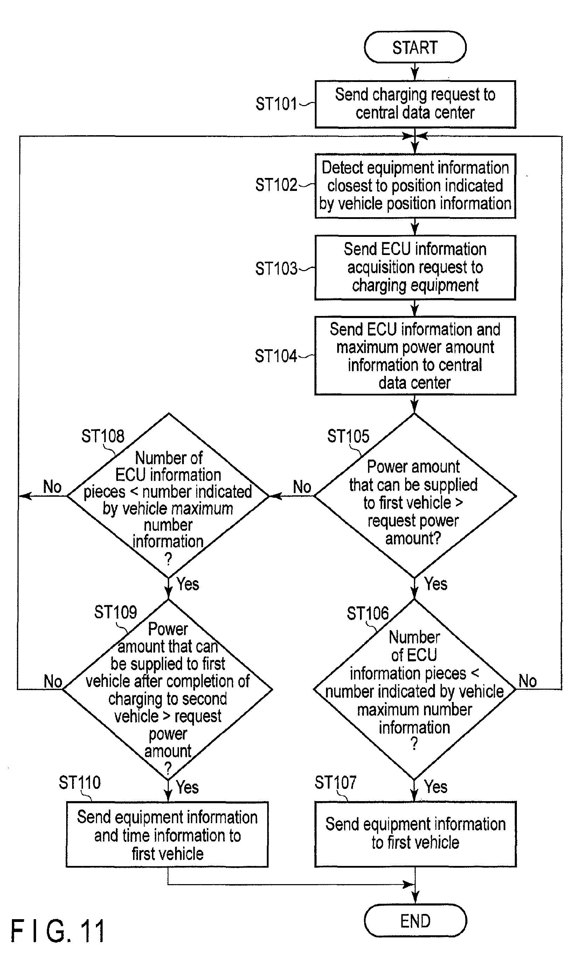

Next, an example of the operation of the EV charging system 100 having the above-described configuration will be described with reference to a flowchart of FIG. 11. It is now assumed that equipment information is prestored in the equipment information storage module 210 in the central data center 200. In addition, it is assumed that the latest ECU information is stored in the ECU information storage module 310 in the power distribution equipment 300.

To start with, the first vehicle 500 sends a charging request to the central data center 200 in accordance with the user's operation (step ST101).

Then, when the controller 220 in the central data center 200 has accepted the input of the charging request which has been sent from the first vehicle 500, the controller 220 detects, from the vehicle position information included in the charging request the input of which has been accepted, and the equipment position information in the equipment information stored in the equipment information storage module 210, the equipment information in which the position indicated by the equipment position information is closest to the position indicated by the vehicle position information (step ST102).

Next, the controller 220 in the central data center 200 requests the power distribution equipment 300 to send the latest ECU information of the charging equipment 400 which is identified by the equipment ID in the equipment information detected in step ST102 (i.e. the central data center 200 sends an ECU information acquisition request to the power distribution equipment 300 in order to acquire the latest ECU information of the charging equipment 400 which is identified by the equipment ID in the detected equipment information) (step ST103). Incidentally, the process in step ST103 may be a process in which the controller 220 in the central data center 200 directly acquires the ECU information stored in the ECU information storage module 310 in the power distribution equipment 300.

Subsequently, if the controller 330 in the power distribution equipment 300 has accepted the input of the ECU information acquisition request which has been sent from the central data center 200, the controller 330 reads out the latest ECU information from the ECU information storage module 310, based on the ECU information acquisition request the input of which has been accepted, and sends the latest ECU information to the central data center 200. Incidentally, the controller 330 in the power distribution equipment 300 sends to the central data center 200 the latest ECU information corresponding to the number of second vehicles 600 which are currently using the charging equipment 400. In addition, the controller 330 in the power distribution equipment 300 sends to the central data center 200 maximum power amount information indicative of a maximum value (in other words, a supply power maximum amount (demand response amount)) of the power amount that can be supplied to the second vehicle 600 (i.e. the power amount that can be supplied to the charging equipment 400 by the power distribution equipment 300) (step ST104).

Next, when the controller 220 in the central data center 200 has accepted the input of the latest ECU information and the maximum power amount information, which have been sent from the power distribution equipment 300, the controller 220 determines whether the charging equipment 400 can supply power to the first vehicle 500, based on the latest ECU information and the maximum power amount information, the input of which has been accepted, and the equipment information detected in step ST102.

Specifically, to start with, the controller 220 in the central data center 200 executes a subtraction between the power amount indicated by the maximum power amount information, the input of which has been accepted, and the sum of power amounts indicated by the necessary power amount information in one or plural ECU information pieces, thereby calculating a power amount which can be supplied to the first vehicle 500. Then, the controller 220 in the central data center 200 determines whether the calculated power amount is larger than a power amount indicated by a request power amount in the charging request (step ST105). Incidentally, in step ST104, in the case where the power distribution equipment 300 sends no ECU information (i.e. there is no second vehicle 600 which is currently using the charging equipment 400), the controller 220 in the central data center 200 determines whether the power amount indicated by the maximum power amount information, the input of which has been accepted, is larger than the power amount indicated by the request power amount in the charging request.

When the determination result in step ST105 is indicative of "larger" (Yes in step ST105), the controller 220 in the central data center 200 determines whether the number of ECU information pieces, the input of which has been accepted, is smaller than a number indicated by the vehicle maximum number information in the equipment information detected in step ST102 (ST106).

When the determination result in step ST106 is indicative of "No" (No in step ST106), the process returns to step ST102, thereby to detect equipment information in which the position indicated by the equipment position information is second closest to the position indicated by the vehicle position information in the charging request sent from the first vehicle 500.

When the determination result in step ST106 is indicative of "smaller" (Yes in step ST106), the controller 220 in the central data center 200 determines that the charging equipment 400 can supply power to the first vehicle 500, and sends the equipment information of the charging equipment 400 to the first vehicle 500 via the communication module 230 (step ST107). In the meantime, if the first vehicle 500 has accepted the input of the equipment information sent from the central data center 200, the first vehicle 500 displays, on the car-navi, a smartphone or the like, the position of the charging equipment 400 indicated by the equipment position information in the equipment information, the input of which has been accepted.

When the determination result in step ST105 is indicative of "No" (No in step ST105), the controller 220 in the central data center 200 determines whether the number of ECU information pieces, the input of which has been accepted, is smaller than the number indicated by the vehicle maximum number information in the equipment information detected in step ST102. That is, the same process as in step ST106 is executed (step ST108).

When the determination result in step ST108 is indicative of "No" (No in step ST108), the process returns to step ST102, thereby to detect equipment information in which the position indicated by the equipment position information is second closest to the position indicated by the vehicle position information in the charging request sent from the first vehicle 500.

When the determination result in step ST108 is indicative of "smaller" (Yes in step ST108), the controller 220 in the central data center 200 assumes that the charging to the second vehicle 600, which has sent the ECU information indicative of the smallest value of the necessary power amount information, among the ECU information pieces the input of which has been accepted, is completed, and determines whether the sum between the power amount, which can be supplied to the first vehicle 500 and has been calculated in step ST105, and the power amount, which is indicated by the necessary power amount information in the ECU information, is larger than the power amount indicated by the request power amount in the charging request (step ST109).

When the determination result in step ST109 is indicative of "No" (No in step ST109), the process returns to step ST102, thereby to detect equipment information in which the position indicated by the equipment position information is second closest to the position indicated by the vehicle position information in the charging request sent from the first vehicle 500.

When the determination result in step ST109 is indicative of "larger" (Yes in step ST109), the controller 220 in the central data center 200 determines that the charging equipment 400 can supply power to the first vehicle 500, and sends the equipment information of the charging equipment 400 to the first vehicle 500 via the communication module 230, together with time information indicative of a time of the end of charging at which the charging to the second vehicle 600, the charging to which has been assumed to be completed in step ST108, will end (step ST110). In the meantime, if the first vehicle 500 has accepted the input of the equipment information and time information sent from the central data center 200, the first vehicle 500 displays, on the car-navi, a smartphone or the like, the position of the charging equipment 400 indicated by the equipment position information in the equipment information, the input of which has been accepted, and the charging end time indicated by the time information.

Incidentally, in the process of step ST105, the power amount, which can be supplied to the first vehicle 500, is calculated by executing the subtraction between the power amount indicated by the maximum power amount information the input of which has been accepted, and the sum of power amounts indicated by the necessary power amount information in one or plural ECU information pieces the input of which has been accepted. However, this calculation is not limited to this example. For example, a subtraction may be executed between a power amount corresponding to x% of the power amount indicated by the maximum power amount information, and the sum of power amounts indicated by the necessary power amount information in one or plural ECU information pieces, the input of which has been accepted, thereby to calculate the power amount which can be supplied to the first vehicle 500. It is thus possible to secure a fixed amount of the power amount, which can be supplied to the in-equipment load 320 in the power distribution equipment 300.

According to the above-described fifth embodiment, the condition of use of the charging equipment 400 can always be confirmed by the configuration including the central data center 200, which determines, in response to the charging request from the first vehicle 500, whether the charging equipment 400 can supply power to the first vehicle 500, and sends equipment information to the first vehicle 500 when the determination result indicates that power can be supplied.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An accounting system comprising:
a charging device configured to charge a battery mounted on a vehicle by a contact method or a non-contact method;
an energy management system configured to be communicable with the charging device and the vehicle;
accounting management means for executing authentication between user information in a user information database, which stores the user information including a user ID and a billing destination associated with the user ID, and information which is received; and
a smart meter network configured to communicably connect the accounting management means and the energy management system,
wherein the energy management system is configured to receive the user ID and a charging power amount from the charging device, to transmit the user ID of the vehicle and the charging power amount to the accounting management means via the smart meter network, and to transmit, when a notification of permission of charging has been received from the accounting management means and the battery of the vehicle has been charged by the charging device, the user ID of the vehicle and a used power amount by the charging to the accounting management means from the charging device via the smart meter network, and
the accounting management means is configured to request payment of a charge corresponding to the used power amount, together with an electric power charge of a user of the vehicle.

2. The accounting system of Claim 1, further comprising a first input/output module which is mounted on the vehicle and is communicable with the energy management system via the charging device.

3. The accounting system of Claim 1 or Claim 2, further comprising:
a second input/output module which is mounted on the vehicle and is communicable by a wireless communication method; and
an automatic relay device configured to mutually change a communication method of the second input/output module and a communication method of the energy management system.

4. The accounting system of Claim 2 or Claim 3, wherein the vehicle is capable of registering a user ID which is registered in an electric power company of the user, and
the energy management system is capable of registering a user ID of the vehicle which can be charged by the charging device, and determines whether charging is permissible or not, by collating, when the user ID and the charging power amount have been received from the vehicle, the registered user ID and the received user ID.

5. The accounting system of any one of Claim 1 to Claim 4, further comprising a settlement device configured to settle, in cash or by card, a charge corresponding to a power amount used for charging the battery of the vehicle by the charging device,
wherein the energy management system is configured to receive the user ID and the charging power amount from the charging device, to transmit the user ID of the vehicle and the charging power amount to the accounting management means via the smart meter network, and to transmit, when a notification of non-permission of charging has been received from the accounting management means, a charge corresponding to the used power amount to the settlement device.

6. The accounting system of any one of Claim 1 to Claim 5, wherein the vehicle includes a terminal for insertion of a recording medium in which a user ID registered in an electric power company of the user is recorded, and the user ID recorded in the recording medium is registered when the recording medium is inserted in the terminal.

7. The accounting system of any one of Claim 1 to Claim 6, wherein the charge corresponding to the used power amount includes an electric power charge and an additional charge.

8. An EV charging system comprising charging equipment, power distribution equipment configured to distribute power to the charging equipment, a first vehicle which is not using the charging equipment and sends a charging request including a vehicle ID for identifying a vehicle, request power amount information indicative of a power amount requested from the charging equipment, and vehicle position information indicative of a present position of the vehicle, a second vehicle which is indicative of a vehicle that is using the charging equipment, and a central data center which is communicable with the first vehicle and the power distribution equipment,
wherein the charging equipment comprises:
supply means for supplying power, which is distributed from the power distribution equipment, to the second vehicle; and
first sending means for sending, upon accepting an input of in-vehicle device control unit information which is sent from the second vehicle and includes at least request power amount information indicative of a power amount that is necessary until completion of charging of the second vehicle, the in-vehicle device control unit information, the input of which has been accepted, to the power distribution equipment,
the power distribution equipment comprises:
first storage means for storing the in-vehicle device control unit information;
write means for writing, upon accepting an input of the in-vehicle device control unit information sent from the charging equipment, the in-vehicle device control unit information, the input of which has been accepted, in the first storage means; and
second sending means for sending to the central data center the stored in-vehicle device control unit information and maximum power amount information indicative of a maximum value of a power amount which can be distributed to the charging equipment, and
the central data center comprises:
second storage means for storing equipment information in which an equipment ID for identifying the charging equipment, equipment position information indicative of a position of the charging equipment, and vehicle maximum number information indicative of a maximum number of vehicles, which can be parked at the charging equipment, are associated;
first detection means for detecting, upon accepting an input of the charging request sent from the first vehicle, equipment information in which a position indicated by the equipment position information is closest to a position indicated by the vehicle position information, from the vehicle position information included in the charging request the input of which has been accepted, and the equipment position information in the stored equipment information;
determination means for determining, upon accepting an input of the in-vehicle device control unit information and the maximum power amount information sent from the power distribution equipment, whether the charging equipment can supply power to the first vehicle, based on the in-vehicle device control unit information and the maximum power amount information the input of which has been accepted, and the detected equipment information; and
third sending means for sending the detected equipment information to the first vehicle, when a determination result by the determination means indicates that power supply is permissible.

9. The EV charging system of Claim 8, wherein the determination means comprises:
first determination means for executing, upon accepting the input of the in-vehicle device control unit information and the maximum power amount information sent from the power distribution equipment, a subtraction between the power amount indicated by the maximum power amount information the input of which has been accepted, and the sum of power amounts indicated by necessary power amount information in the in-vehicle device control unit information the input of which has been accepted, and thereafter determining whether a value calculated as a result of the subtraction is larger than a power amount indicated by the request power amount information in the charging request the input of which has been accepted;
second determination means for determining, when a determination result by the first determination means is indicative of "larger", whether a number of in-vehicle device control unit information pieces, the input of which has been accepted, is smaller than a number indicated by the vehicle maximum number information in the detected equipment information; and
means for assuming, when a determination result by the second determination means is indicative of "smaller", that the charging equipment can supply power to the first vehicle.

10. The EV charging system of Claim 8, wherein the central data center further comprises:
second detection means for detecting, when the determination result by the determination means is indicative of "No", equipment information in which the position indicated by the equipment position information is n-th (n ≧ 2) closest to the position indicated by the vehicle position information, from the vehicle position information included the input of which has been accepted, and the equipment position information in the stored equipment information.

11. The EV charging system of Claim 8, wherein the first vehicle comprises display means for displaying, when the first vehicle has accepted an input of the equipment information sent from the central data center, the equipment information the input of which has been accepted, on a display device.

12. The EV charging system of Claim 8, wherein the first sending means comprises means for sending the in-vehicle device control unit information, the input of which has been accepted, to the power distribution equipment, after converting an in-vehicle communication protocol used in the in-vehicle device control unit information, the input of which has been accepted, to a communication protocol for the power distribution equipment.

13. The EV charging system of Claim 8, wherein the second sending means comprises fourth sending means for sending the in-vehicle device control unit information to the charging equipment, after converting an in-vehicle communication protocol used in the in-vehicle device control unit information to a communication protocol for the power distribution equipment.
